Europäisches Patentamt

European Patent Office

Office européen des brevets

(11) Publication number: **0 060 136**
**B1**

(12) **EUROPEAN PATENT SPECIFICATION**

(45) Date of publication of patent specification: **07.05.86**

(21) Application number: **82301195.2**

(22) Date of filing: **09.03.82**

(51) Int. Cl.⁴: **B 65 G 53/06,** B 65 G 53/36,
F 23 K 3/02

(54) **Method and apparatus for conveying particulate material.**

(30) Priority: **09.03.81 GB 8107282**

(43) Date of publication of application:
**15.09.82 Bulletin 82/37**

(45) Publication of the grant of the patent:
**07.05.86 Bulletin 86/19**

(84) Designated Contracting States:
**AT BE CH DE FR GB IT LI LU NL SE**

(56) References cited:
**FR-A-2 314 121**
**US-A-4 111 492**

(73) Proprietor: **MACAWBER ENGINEERING
LIMITED
Shaw Lane Industrial Estate
Doncaster South Yorkshire DN2 4SE (GB)**

(72) Inventor: **Snowdon, Brian
14, Airedale Avenue Tickhill
Doncaster South Yorkshire (GB)**

(74) Representative: **Geldard, David Guthrie
URQUHART-DYKES AND LORD 11th Floor,
Tower House Merrion Way
Leeds, LS2 8PB West Yorkshire (GB)**

Courier Press, Leamington Spa, England.

## Description

This invention relates to conveying systems and in particular to systems for conveying particulate material along a pipe.

A previous system for conveying grit and ash from boilers where coal is burnt to a remote collection point is described in French patent application No. 2314121. This system has a conveying pipeline with a material outlet at one end and a mechanism at the opposite end for supplying intermittent blasts of compressed air to the pipeline. Located between this air supply and the material outlet are two or more material inlet chambers, each chamber opening at its bottom end into the pipeline and having at its upper end a dome valve which may be opened to allow material to pass into the chamber, or closed to prevent material from passing into the chamber.

In operation, ash accumulates above a material inlet chamber to a predetermined level, the dome valve is then opened allowing ash to enter the inlet chamber and high pressure air is applied to the pipeline, thus pushing the ash from the inlet chamber along the pipeline. This sequence of operations forms a complete conveying cycle and is repeated a pre-set number of times until all the accumulated ash above the inlet chamber is consumed. During this conveying sequence all the other inlet chambers along the pipeline are inoperative until the conveying sequence in question is completed.

This system is not generally applicable to all situations. In some cases the material to be conveyed is collected in a single large storage hopper. Also this system suffers from the disadvantage that the time taken to convey ash from all the inlet chambers is long.

It is the purpose of the present invention to provide a system for conveying particulate material by means of compressed air from a number of different discharge points along a common pipeline from a single storage hopper to a remote collection point which allows simultaneous conveying from a number of inlets, thus resulting in a considerable time saving.

According to the present invention apparatus for conveying particulate material comprises a plurality of inlets to a common conduit, each inlet comprising an inlet chamber having a lower open end directly connected to the common conveying conduit, means for feeding particulate material to the inlet, each inlet having associated therewith a valve through which particulate material may enter the inlet chamber, each valve being capable of being opened to allow passage of particulate material therethrough, and being closed to prevent passage of particulate material therethrough, and, gas feed means for feeding pressurised gas to the apparatus to propel particulate material through the conduit, characterized in that all the inlets are coupled to a single storage hopper and in that the apparatus also includes control means coupled between the valves and the gas feed means, for operating and controlling the apparatus such that the apparatus has two stages of operation, a first filling stage, in which at least two of the inlet chambers are sequentially or simultaneously filled by opening their associated valves, and a second conveying stage in which all the valves are closed and pressurised gas is fed to the apparatus to propel particulate material from the at least two inlet chambers simultaneously along the conduit.

The present invention makes use of a dense or medium phase pneumatic conveying technique and may be applied, for example, to the conveying of dust collected in large electrostatic or bag type air filters such as those used in power stations and process plants. Because of the large physical size of these filter units the dust is collected in a large number, for example, forty, dust collecting hoppers fitted beneath the filter system. Known methods of collecting this dust at one central point for disposal processing includes

a) Hydraulic sluicing systems where high pressure water is sluiced through open channels, the dust being fed from the collection points through rotary discharge valves into the water stream, the water being discharged into settling ponds;

b) Drag link or en-masse conveyors collecting, from a line of discharge points into other conveyors or into pneumatic transport systems;

c) Vacuum collection from each discharge point involving high velocity lean phase conveying which causes conveying pipe and bend corrosion;

d) A separate pneumatic conveying vessel connected to each discharge point and being connected to a common conveying pipe, each vessel working at a different time, pipeline valves being fitted in the conveying pipe to prevent material flow into those vessels not operating through the common conveying pipe.

Another application of the present invention is for conveying lump coal of the type used in industrial boilers. The coal may contain a high moisture content making the coal cohesive. Known methods of moving coal for a plurality of points on one large storage bunker include mechanical devices such as belt conveyors, enmasse conveyors and screw conveyors. A particular application may be the conveying of coal on coal fired ships and an advantage of the present invention is that the system can easily be made totally sealed, water and dust tight and fully automatic.

Furthermore, apparatus in accordance with the present invention is also relatively small and can withstand water flooding of the bunkers should a fire occur. Also material may be conveyed with apparatus according to the present invention with a considerable time saving over known conveying systems.

In apparatus according to the present invention pressurised gas may be fed to the inlets and it may be fed to the first of the inlets or to more than one of said inlets. The inlets are in the form of chambers each communicating with the conduit.

In an alternative embodiment in accordance with the present invention the valves are opened sequentially to fill the inlets.

The pressurised gas may be supplied sequentially to the chambers moving material from a first chamber into the conduit before applying gas to the next successive chamber.

The present invention also provides a method for conveying particulate material along a conduit, characterized in that it comprises feeding material simultaneously or sequentially via valves into at least two inlet chambers directly connected to the conduit, closing the valves and applying pressurised gas to the conveying system to convey material from the at least two inlet chambers simultaneously along the conduit.

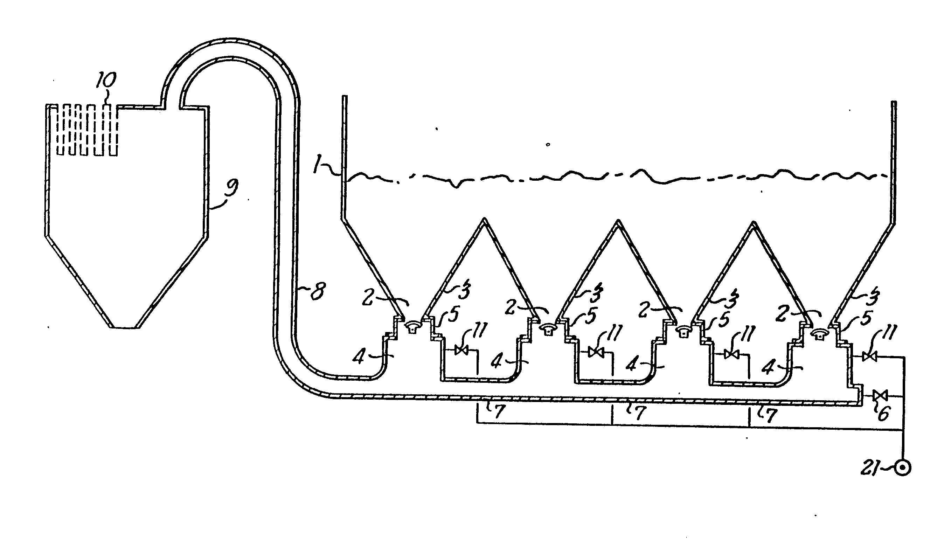

An embodiment of the present invention will now be described, by way of example only, and with reference to the accompanying drawing, which illustrates apparatus in accordance with the present invention.

Referring to the drawing, apparatus in accordance with the present invention includes a storage hopper 1 having four outlets 2. Particulate material located in storage hopper 1 collects or is stored in all of the conical shaped hoppers above the conveying chambers 4. Each conveying chamber is surmounted by a closure member 5, for example, a closure member having a part-spherical or dome-shaped valve member similar to that described in UK patent specification No. 1539079, which valve member is capable of cutting through a static column of particulate material and forming an air-tight seal. Pressurised air is supplied from source 21. It can be supplied directly to conveying pipe 7 through valve 6. It can also be supplied to each of the conveying chambers by valves 11. Each conveying chamber 4 leads into conveying pipe 7. The vessels are so constructed as to allow the passage of particulate material from one vessel through another vessel without obstruction. Conveying pipe 7 leads into conveying pipe 8 which in turn leads to material receiving hopper 9. Hopper 9 is fitted with a filter unit 10 to allow the conveying air to escape without carrying dust with it.

The start of the conveying sequence can be initiated either by material level controls in the hoppers or by time sequence. At the start of the sequence of operations the conveying chambers 4 and pipework 7 and 8 are empty, air valve 6 is closed and valves 5 are closed.

Operating means (not shown) open valves 5 simultaneously for a pre-determined time period allowing all the chambers 4 to fill with particulate material. Valves 5 are closed and sealed and air valve 6 opens pressurising the vessel 4 nearest to valve 6. The air in conveying pipe 7 is compressed by the movement of material/air in the first chamber and this causes the material in the second chamber to move and so on until the complete material mass in the vessels is transferred through the conveying pipe 8 to hopper 9. When all the material has reached hopper 9, valve 6 closes and the system is now ready to begin another conveying cycle.

Where the materials being conveyed are cohesive, it may be necessary to apply air into all of the conveying chambers and through valves 11 simultaneously with the operation of valve 6 in order to encourage material movement into the conveying pipe. Alternatively, valves 11 may be operated sequentially starting with the first chamber (that closest to valve 6). When the material in the first chamber is moved into the conveying pipe, air is applied to the next successive chamber and so on until all the material is being conveyed.

With some particulate materials, it would be necessary to allow the chambers to fill with material sequentially starting with the one nearest to valve 6 so that the displaced air can escape down conveying conduit 8 before the next chamber is filled and so on until all the chambers are full.

An advantage of the present invention is that it allows conveying chambers of small height to be used to transfer high tonnage rates from multiple discharging points into a common conveying pipe.

**Claims**

1. A method for conveying particulate material along a conduit (7) characterized in that it comprises feeding material simultaneously or sequentially via valves (5) into at least two inlet chambers (4) directly connected to the conduit (7), closing valves (5) and applying pressurised gas to the conveying system to convey material from the at least two inlet chambers simultaneously along the conduit (7).

2. A method according to claim 1, further characterized in that pressurised gas is also supplied sequentially to the inlet chambers whereby material is moved from one inlet chamber into the conduit (7) before gas is applied to the next successive inlet.

3. Apparatus for conveying particulate material, the apparatus comprising a plurality of inlets to a common conveying conduit (7), each inlet comprising an inlet chamber (4) having a lower open end directly connected to the common conveying conduit (7), means (1, 2) for feeding particulate material to the inlet, each inlet having associated therewith a valve (5) through which particulate material may enter the inlet chamber (4), each valve (5) being capable of being opened to allow passage of particulate material therethrough, and being closed to prevent passage of particulate material therethrough, and, gas feed means (21, 11, 6) for feeding pressurised gas to the apparatus to propel particulate material through the conduit (7), characterized in that all the inlets are coupled to a single storage hopper and in that the apparatus also includes control means coupled between the valves (5) and the gas feed means (21, 11, 6) for operating and controlling the apparatus, such that, the apparatus has two stages of operation, a first filling stage, in which at least two of the inlet chambers (4) are sequentially or simultaneously filled by opening their associated valves (5), and a second conveying stage in which all the valves (5) are closed and pressurised gas is fed to the apparatus to propel particulate material from the at least two inlet chambers (4) simultaneously along the conduit (7).

## Patentansprüche

1. Verfahren zum Fördern von teilchenförmigem Material entlang einer Leitung (7), dadurch gekennzeichnet, daß es beinhaltet, das Material gleichzeitig oder sequentiell über Ventile (5) in wenigstens zwei Einlaßkammern (4), die mit der Leitung (7) direkt verbunden sind, zu fördern, die Ventile (5) zu schließen und das Fördersystem mit Druckgas zu beaufschlagen, um das Material aus den wenigstens beiden Einlaßkammern gleichzeitig entlang der Leitung (7) zu fördern.

2. Verfahren nach Anspruch 1, dadurch gekennzeichnet, daß Druckgas auch den Einlaßkammern sequentiell zugeführt wird, wodurch das Material von einer Einlaßkammer in die Leitung (7) gefördert wird, bevor Gas dem nächsten folgenden Einlaß zugeführt wird.

3. Vorrichtung zum Fördern von teilchenförmigem Material, mit mehreren Einlässen in eine gemeinsame Förderleitung (7), wobei jeder Einlaß eine Einlaßkammer (4) aufweist, die ein unteres offenes Ende hat, das direkt mit der gemeinsamen Förderleitung (7) verbunden ist, eine Einrichtung (1, 2) zum Fördern von teilchenförmigem Material zu dem Einlaß, wobei jedem Einlaß ein Ventil (5) zugeordnet ist, über das teilchenförmiges Material in die Einlaßkammer (4) eintreten kann, wobei jedes Ventil (5) geöffnet werden kann, um den Durchtritt des teilchenförmigen Materials zu gestatten, und geschlossen werden kann, um den Durchtritt des teilchenförmigen Materials zu verhindern, und eine Gaszuführeinrichtung (21, 11, 6) zur Zufuhr von Druckgas zu der Vorrrichtung, um das teilchenförmige Material durch die Leitung (7) zu treiben, dadurch gekennzeichnet, daß sämtliche Einlässe mit einem einzigen Vorratsbunker verbunden sind und daß die Vorrichtung außerdem eine zwischen die Ventile (5) und die Gaszuführeinrichtung (21, 11, 6) geschaltete Steuereinrichtung zum Betätigen und Steuern der Vorrichtung aufweist, so daß die Vorrichtung zwei Betriebsstufen hat, eine erste Füllstufe, in welcher wenigstens zwei der Einlaßkammern (4) durch Öffnen ihrer zugeordneten Ventile (5) sequentiell oder gleichzeitig gefüllt werden, und eine zweite Förderstufe, in welcher sämtliche Ventile (5) geschlossen sind und Druckgas der Vorrichtung zugeführt wird, um das teilchenförmige Material aus den wenigstens beiden Einlaßkammern (4) gleichzeitig entlang der Leitung (7) zu treiben.

## Revendications

1. Procédé pour assurer le transport de matériau particulaire le long d'un conduit (7), caractérisé par l'introduction simultanée ou séquentielle du matériau à travers des soupapes (5) dans au moins deux chambres d'entrée (4) liées directement au conduit (7), par la fermeture des soupapes (5) et l'alimentation du système de transport en gaz comprisé afin de transporter le matériau à partir les au moins deux chambres d'entrée simultanément le long du conduit (7).

2. Procédé selon revendication 1, caractérisé en outre par le fait que du gaz comprimé est amené de manière séquentielle également aux chambres d'entrée, par conséquent le matériau est introduit d'une chambre d'entrée dans le conduit (7) avant que du gaz soit amené à la chambre d'entrée suivante.

3. Appareil pour transporter du matériau particulaire, constitué de plusieurs entrées à un conduit de transport commun (7), chaque entrée présentant une chambre d'entrée (4) qui dispose d'une extrémité inférieure ouverte liée directement au conduit de transport commun (7), des dispositifs (1, 2) pour amener du matériau particulaire à l'entrée, chaque entrée étant associée à une soupape (5) à travers laquelle le matériau particulaire peut entrer dans la chambre d'entrée (4), chaque soupape (5) pouvant être ouverte pour permettre le passage du matériau particulaire et fermée pour en empêcher le passage, et des dispositifs d'aménage de gaz (21, 11, 6) destinés à l'introduction de gaz comprimé dans l'appareil pour propulser le matériau particulaire à travers le conduit (7), caractérisé par le fait que toutes les entrées sont liées à une seul réservoir de stockage et que l'appareil présente en outre des dispositifs de commande logés entre les soupapes (5) et les dispositifs d'aménage de gaz (21, 11, 6) pour actionner et commander l'appareil de manière que celui-ci présente deux régimes de fonctionnement, un premier régime de remplissage auquel au moins deux des chambres d'entrée (4) sont remplies de manière séquentielle ou simultane moyennant l'ouverture des soupapes associées (5) et un second régime de transport auquel toutes les soupapes (5) sont fermées et du gaz comprimé est introduit dans l'appareil afin de propulser le matériau particulaire à partir des au moins deux chambres d'entrée (4) simultanément le long du conduit (7).

0 060 136